# EUROPEAN PATENT APPLICATION

(11) **EP 4 654 544 A1**
(43) Date of publication of application: **26.11.2025**
(21) Application number: 24802511.6
(22) Date of filing: 08.01.2024
(51) Int. Cl.: H04L 41/0894

(54) **INTER-TENANT NETWORK CONNECTION METHOD AND APPARATUS**

(30) Priority: 05.05.2023 CN 202310499204
(71) Applicant: JINGDONG TECHNOLOGY INFORMATION TECHNOLOGY CO., LTD., Beijing 100176 (CN)
(72) Inventor: WANG, Kun, Beijing 100176 (CN); ZHAO, Jianxing, Beijing 100176 (CN); FAN, Jiangang, Beijing 100176 (CN)
(74) Representative: Böckmann genannt Dallmeyer, Georg Nikolas
(86) International application number: PCT/CN2024/071023
(87) International publication number: WO 2024/230222

(57) **Abstract**

Disclosed in embodiments of the present disclosure are a method and apparatus for inter-tenant network connection. A specific implementation of the method comprises: acquiring first network connection custom resource information; in response to receiving an inter-tenant network connection event, determining a first network connection tenant information set corresponding to the first network connection custom resource information; determining a first namespace information set corresponding to each piece of network connection tenant information in the first network connection tenant information set to obtain a first namespace information set group; for each piece of first namespace information in the first namespace information set group, creating network policy information corresponding to the first namespace information as first network policy information; and establishing an inter-tenant network connection for the first network connection tenant information set according to a first network policy information set group.

## Description

### CROSS-REFERENCE TO RELATED APPLICATIONS

The present application claims priority to Chinese Patent Application No. 202310499204.3, which was filed on May 5, 2023 and entitled "Inter-Tenant Network Connection Method, Apparatus, Electronic Device and Computer-Readable Medium", the content of which is hereby incorporated by reference in its entirety.

### TECHNICAL FIELD

Embodiments of the present disclosure relate to the field of computer technology, and in particular to a method and apparatus for an inter-tenant network connection.

### BACKGROUND

At present, the container orchestration platform in the cloud-native field has powerful container orchestration capabilities, opens network interfaces, and supports custom container networks. For the configuration of tenant networks, the commonly used method is using CNI (Container Network Interface) plugins to implement custom configuration of tenant networks corresponding to tenants.

However, the inventor found that when the above method is adopted, the following technical problems often occur:
Using CNI plugins to implement custom configuration of tenant networks often causes abnormal network connections between multiple tenants.

The above information disclosed in the Background is only used to enhance the understanding of the background of the concept of the present disclosure, and therefore, it may contain information that does not form the prior art known to ordinary technicians in the field.

### SUMMARY

The content of the present disclosure is used to introduce concepts in a brief form, and these concepts will be described in detail in the specific implementation section below. The content of the present disclosure is not intended to identify the key features or necessary features of the technical solution for protection, nor is it intended to limit the scope of the technical solution for protection.

Some embodiments of the present disclosure propose a method, apparatus, electronic device and computer-readable medium for inter-tenant network connection to solve the technical problem mentioned in the above Background.

According to the first aspect of the disclosure, some embodiments of the disclosure provide a method for inter-tenant network connection, comprising: acquiring pre-configured first network connection custom resource information; in response to receiving an inter-tenant network connection event for the first network connection custom resource information, determining a first network connection tenant information set corresponding to the first network connection custom resource information; determining a first namespace information set corresponding to each piece of network connection tenant information in the first network connection tenant information set to obtain a first namespace information set group; for each piece of first namespace information in the first namespace information set group, creating network policy information corresponding to the first namespace information as first network policy information; and establishing an inter-tenant network connection for the first network connection tenant information set according to an obtained first network policy information set group.

According to one or more embodiments of the present disclosure, the method further comprises: acquiring pre-configured first tenant custom resource information; in response to receiving a tenant definition event for the first tenant custom resource information, determining a second namespace information set and a tenant information set corresponding to the first tenant custom resource information; determining network policy information corresponding to each piece of second namespace information in the second namespace information set as second network policy information to obtain a second network policy information set; and establishing an association relationship between the second namespace information set and the tenant information set according to the second network policy information set.

According to one or more embodiments of the present disclosure, the method further comprises: acquiring pre-configured second network connection custom resource information and second tenant custom resource information; in response to receiving a namespace establishment event, determining a defined tenant information set according to the second tenant custom resource information; establishing an internal network of a defined tenant corresponding to each piece of defined tenant information in the defined tenant information set; in response to determining that the internal network of each defined tenant has been established, determining a second network connection tenant information set according to the second network connection custom resource information, wherein the second network connection tenant information set is a subset in the defined tenant information set; and establishing an inter-tenant network for the second network connection tenant information set.

According to one or more embodiments of the present disclosure, the method further comprises: in response to receiving a network connection adjustment event for the first network connection tenant information set, acquiring the first network policy information set group and network connection adjustment information; performing information adjustment on network policy information corresponding to the network connection adjustment information in the first network policy information set group to generate first network policy adjustment information and obtain a first network policy adjustment information set group; and adjusting the inter-tenant network corresponding to a network connection tenant information subset according to the first network policy adjustment information set group.

According to one or more embodiments of the present disclosure, the method further comprises: in response to receiving an association relationship adjustment event for tenant-namespace association relationship information, acquiring tenant-namespace relationship adjustment information; performing information adjustment on at least one piece of second network policy information associated with the tenant-namespace relationship adjustment information in the second network policy information set to obtain at least one piece of second network policy adjustment information; and performing an association relationship adjustment on the tenant-namespace association relationship information according to the at least one piece of second network policy adjustment information.

According to one or more embodiments of the present disclosure, the determining a first namespace information set corresponding to each piece of network connection tenant information in the first network connection tenant information set comprises: with a namespaces selector, determining a first namespace information set corresponding to each piece of network connection tenant information in the first network connection tenant information set.

According to one or more embodiments of the present disclosure, the tenant network connection between each piece of first network connection tenant information in the first network connection tenant information set is pre-isolated based on a target tenant network isolation plugin.

According to the second aspect of the disclosure, some embodiments of the disclosure provides an apparatus for inter-tenant network connection, comprising: an acquisition unit configured to acquire pre-configured first network connection custom resource information; a first determination unit configured to, in response to receiving an inter-tenant network connection event for the first network connection custom resource information, determine a first network connection tenant information set corresponding to the first network connection custom resource information; a second determination unit configured to determine a first namespace information set corresponding to each piece of network connection tenant information in the first network connection tenant information set to obtain a first namespace information set group; a creation unit configured to, for each piece of first namespace information in the first namespace information set group, create network policy information corresponding to the first namespace information as first network policy information; and an establishment unit, configured to establish an inter-tenant network connection for the first network connection tenant information set according to an obtained first network policy information set group.

According to the third aspect of the disclosure, some embodiments of the disclosure provides an electronic device, comprising: one or more processors; and a storage device, on which one or more programs are stored, wherein the one or more programs, when executed by the one or more processors, cause the one or more processors to implement the method described in any one implementation of the first aspect.

According to the fourth aspect of the disclosure, some embodiments of the disclosure provides a computer readable medium having a computer program stored thereon, wherein the computer program, when executed by a processor, implements the method described in any one implementation of the first aspect.

According to the fifth aspect of the disclosure, some embodiments of the disclosure provides a computer program product comprising a computer program, wherein the computer program, when executed by a processor, implements the method described in any one implementation of the first aspect.

### BRIEF DESCRIPTION OF THE DRAWINGS

The above and other features, advantages and aspects of the embodiments of the present disclosure will become more apparent with reference to the following detailed description in conjunction with the accompanying drawings. Throughout the accompanying drawings, the same or similar reference numerals represent the same or similar elements. It should be understood that the drawings are schematic and that components and elements are not necessarily drawn to scale.
FIG1 is a schematic diagram of an application scenario of a method for inter-tenant network connection according to some embodiments of the present disclosure.
FIG2 is a flowchart of some embodiments of a method for inter-tenant network connection according to the present disclosure.
FIG3 is a flowchart of some other embodiments of a method for inter-tenant network connection according to the present disclosure.
FIG.4 is a schematic diagram of an inter-tenant network adjustment in some embodiments of a method for inter-tenant network connection according to the present disclosure.
FIG.5 is a schematic diagram of a structure of some embodiments of an apparatus for inter-tenant network connection according to the present disclosure.
FIG.6 is a schematic diagram of a structure of an electronic device suitable for implementing some embodiments of the present disclosure.

### DETAILED DESCRIPTION

The embodiments of the present disclosure will be described in more details below with reference to the accompanying drawings. Although certain embodiments of the present disclosure are shown in the accompanying drawings, it should be understood that the present disclosure can be implemented in various forms and should not be construed as being limited to the embodiments described herein. On the contrary, these embodiments are provided to provide a more thorough and complete understanding of the present disclosure. It should be understood that the drawings and embodiments of the present disclosure are only for exemplary purposes and are not intended to limit the scope of protection of the present disclosure.

It should also be noted that for ease of description, only the relevant parts related to the relevant disclosure are shown in the drawings. The embodiments and features in the embodiments of the present disclosure can be combined with each other without conflict.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "one" and "multiple" mentioned in the present disclosure are illustrative rather than restrictive, and those skilled in the art should understand that unless otherwise clearly indicated in the context, they should be understood as "one or more".

The names of the messages or information exchanged between multiple devices in the embodiments of the present disclosure are only for illustrative purposes and are not used to limit the scope of these messages or information.

The collection, storage, use and other operations of the information (e.g., the first network connection custom resource information) involved in the present disclosure, before performing the corresponding operations, the relevant organizations or individuals shall fulfill the obligations including conducting information security impact assessment, fulfilling the obligation to inform the information subject, and obtaining the authorization and consent of the information subject in advance.

The present disclosure will be described in detail below with reference to the accompanying drawings and in combination with the embodiments.

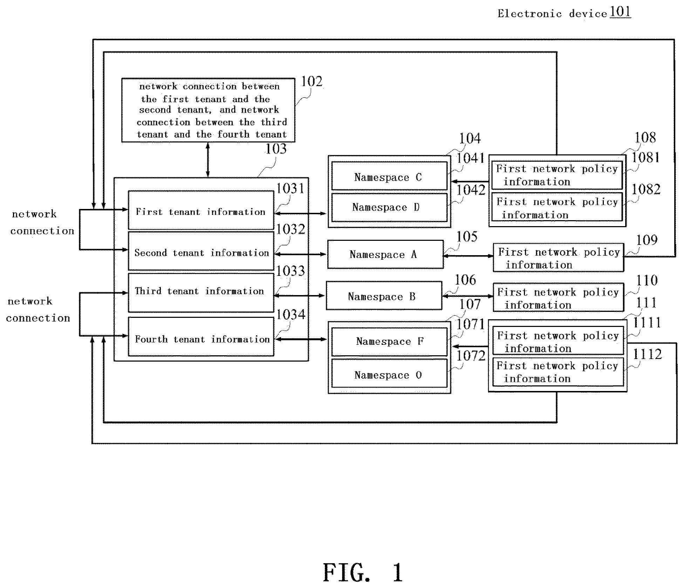

FIG1 is a schematic diagram of an application scenario of a method for inter-tenant network connection according to some embodiments of the present disclosure.

In the application scenario of FIG. 1, first, electronic device 101 may acquire pre-configured first network connection custom resource information 102. In this application scenario, first network connection custom resource information 102 may include: a first tenant and second tenant network connection, a third tenant and a fourth tenant network connection. Then, in response to receiving an inter-tenant network connection event for the first network connection custom resource information 102, electronic device 101 may determine first network connection tenant information set 103 corresponding to the first network connection custom resource information 102. In the application scenario, first network connection tenant information set 103 may include: first tenant information 1031, second tenant information 1032, third tenant information 1033 and fourth tenant information 1034. Next, electronic device 101 may determine a first namespace information set corresponding to each network connection tenant information in first network connection tenant information set 103 to obtain a first namespace information set group. In the application scenario, first namespace information set 104 corresponding to first tenant information 1031 includes: namespace C 1041, and namespace D 1042. The first namespace information set corresponding to second tenant information 1032 includes: namespace A 105. The first namespace information set corresponding to third tenant information 1033 includes: namespace B 106. First namespace information set 107 corresponding to fourth tenant information 1034 includes: namespace F 1071, and namespace O 1072. Furthermore, for each first namespace information in the above-mentioned first namespace information set group, electronic device 101 can create network policy information corresponding to the first namespace information as first network policy information; in the application scenario, first namespace information set 104 corresponds to first network policy information set 108. First network policy information set 108 includes: first network policy information 1081 corresponding to namespace C 1041, and first network policy information 1082 corresponding to namespace D 1042. First namespace information 105 corresponds to the first network policy information set 109. The first namespace information 106 corresponds to first network policy information set 110. First namespace information set 107 corresponds to first network policy information set 111. First network policy information set 111 includes: first network policy information 1111 corresponding to namespace F 1071, and first network policy information 1112 corresponding to namespace O 1072. Finally, according to the obtained first network policy information set group, an inter-tenant network connection for first network connection tenant information set 103 is established.

It should be noted that the above-mentioned electronic device 101 can be hardware or software. When the electronic device is hardware, it can be implemented as a distributed cluster composed of multiple servers or terminal devices, or as a single server or a single terminal device. When the electronic device is embodied as software, it can be installed in the hardware devices listed above. It can be implemented as multiple software or software modules for providing distributed services, for example, or as a single software or software module. No specific limitation is made here.

It should be understood that the number of electronic devices in FIG. 1 is only schematic. According to the implementation needs, there can be any number of electronic devices.

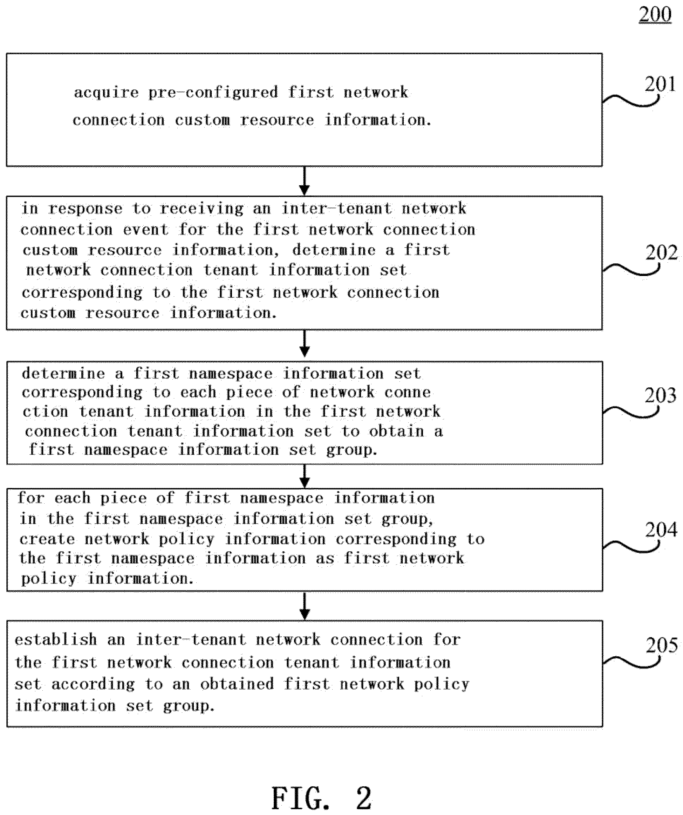

Further referring to FIG. 2, a process 200 of some embodiments of the method for inter-tenant network connection according to the present disclosure is shown. The method for inter-tenant network connection comprises the following steps:
Step 201 of acquiring pre-configured first network connection custom resource information.

In some embodiments, the performing subject of the above-mentioned method for inter-tenant network connection (for example, electronic device 101 shown in FIG. 1) can acquire pre-configured first network connection custom resource information in a wired connection manner or a wireless connection manner. Therein, first network connection custom resource information can be pre-custom configured tenant resource information that represents inter-tenant communication (i.e., network connection). In practice, first network connection custom resource information can be a CR (Custom Resource) resource with a specific data structure for multiple tenants. The CR resource defines tenant information of tenants that require an inter-tenant network connection. The above tenant information can be information that represents the tenant identity. It should be noted that the tenant can be for one user or for a group of users, and there is at least one corresponding namespace. It should be noted that for different tenants, at least one corresponding namespace is used for isolation. The namespace can be a namespace under k8s (Kubernetes, container orchestration platform). Kubernetes supports multiple virtual clusters, and the bottom layer depends on the same physical cluster. These virtual clusters are called namespaces. Namespaces are k8s cluster-level resources. In practice, corresponding namespaces can be created for different users, tenants, environments or projects. The namespace may be used to separate resources such as process trees, network interfaces, mount points, and inter-process communication.

It should be noted that the above-mentioned performing subject may be a Tenant Controller. The above-mentioned Tenant Controller may be a pre-set controller. The above-mentioned Tenant Controller may be a controller that performs configuration processing for tenant-related information.

In some optional implementations of some embodiments, the tenant network connection between each piece of first network connection tenant information in the above-mentioned first network connection tenant information set is pre-isolated based on the target tenant network isolation plugin. Among them, the above-mentioned target tenant network isolation plugin may be a CNI (Container Network Interface) plugin.

Step 202 of in response to receiving an inter-tenant network connection event for the first network connection custom resource information, determining a first network connection tenant information set corresponding to the first network connection custom resource information.

In some embodiments, in response to receiving an inter-tenant network connection event for the first network connection custom resource information, the performing subject may determine the first network connection tenant information set corresponding to first network connection custom resource information. The inter-tenant network connection event may be an event for executing a corresponding inter-tenant network connection. The first network connection tenant information set may be a tenant information set to be network connected involved in first network connection custom resource information.

In practice, the first network connection tenant information set may be {"the first tenant makes a network connection with the second tenant", "the third tenant, the fourth tenant and the fifth tenant make a network connection"}. The corresponding first network connection tenant information set may include: first tenant information, second tenant information, third tenant information, fourth tenant information and fifth tenant information.

As an example, the performing subject may receive the inter-tenant network connection event for the first network connection custom resource information through an api server (interface service) in k8s (Kubernetes, container orchestration platform).

As another example, the performing subject may generate the first network connection tenant information set by determining the tenant field in the first network connection custom resource information.

Step 203 of determining a first namespace information set corresponding to each piece of network connection tenant information in the first network connection tenant information set to obtain a first namespace information set group.

In some embodiments, the performing subject may determine the first namespace information set corresponding to each network connection tenant information in the first network connection tenant information set to obtain a first namespace information set group, wherein the first namespace information set may include at least one piece of first namespace information, the first namespace information may correspond to identification information of the namespace; and wherein the association relationship between the network connection tenant information and the corresponding first namespace information set is a pre-established relationship.

In some optional implementations of some embodiments, the performing subject may use a namespaces selector to determine the first namespace information set corresponding to each piece of network connection tenant information in the first network connection tenant information set, wherein the namespaces selector may be a selector which filters the namespace based on a label. In practice, the above-mentioned namespaces selector may be a namespaces selector.

Step 204 of for each piece of first namespace information in the first namespace information set group, creating network policy information corresponding to the first namespace information as first network policy information.

In some embodiments, the performing subject may create network policy information corresponding to the first namespace information for each piece of first namespace information in the first namespace information set group as the first network policy information. The first network policy information may be a Network Policy resource. Network Policy is a specification of communication rules allowed between Pods (the smallest deployable computing unit created and managed in Kubernetes) and other Network Endpoints. Network Policy can act on the pods under the corresponding namespace to implement corresponding network connection management and control.

Step 205 of establishing an inter-tenant network connection for the first network connection tenant information set according to an obtained first network policy information set group.

In some embodiments, the performing subject may establish an inter-tenant network connection for the first network connection tenant information set according to the obtained first network policy information set group.

In practice, the first network connection tenant information set includes: first tenant information, second tenant information, third tenant information, fourth tenant information and fifth tenant information. The first network connection tenant information set is {"the first tenant and the second tenant make a network connection", "the third tenant, the fourth tenant and the fifth tenant make a network connection"}. Then, the performing subject may establish a network connection between the "first tenant" and the "second tenant", and may also establish a network connection between the third tenant, the fourth tenant and the fifth tenant.

As an example, the performing subject may use open source calico network plugins, flannel network plugins and/or the cilium network plugins to establish an inter-tenant network connection for the first network connection tenant information set according to the obtained first network policy information set group.

In some optional implementations of some embodiments, following step 205, the steps further include:
Step 1 of obtaining the pre-configured second network connection custom resource information and the second tenant custom resource information. Among them, the second network connection custom resource information can also be tenant resource information that is pre-custom configured to represent the inter-tenant communication (i.e., network connection). The second network connection custom resource information can be the same as the first network connection custom resource information, or it can be different. The second tenant custom resource information can represent the corresponding relationship between the tenant and the namespace. The second tenant custom resource information represent the corresponding relationship between the tenant and the namespace. For example, the second tenant custom resource information may include: the corresponding relationship between "tenant A" and "A namespace", the corresponding relationship between "tenant B" and "B namespace", and the corresponding relationship between "tenant C" and "C namespace".

Step 2 of in response to receiving a namespace establishment event, determining a defined tenant information set according to the second tenant custom resource information, wherein the namespace establishment event can be an event of establishing at least one namespace corresponding to the tenant, and the defined tenant information in the defined tenant information set can be the tenant information involved in the second tenant custom resource information.

In practice, in response to receiving a namespace establishment event, the above-mentioned performing subject can filter out the "tenant information field" from second tenant custom resource information to generate a defined tenant information set.

Step 3 of establishing an internal network of a defined tenant corresponding to each piece of defined tenant information in the defined tenant information set. The internal network of the defined tenant can be a container network between each container in the corresponding pod of the defined tenant.

As an example, the above performing subject can establish a plugin through a relevant internal network to establish an internal network of a defined tenant corresponding to each piece of defined tenant information in the defined tenant information set.

Step 4 of in response to determining that the internal network of each defined tenant has been established, determining a second network connection tenant information set according to the second network connection custom resource information, wherein the second network connection tenant information set is a subset in the defined tenant information set, and wherein the second network connection tenant information in the second network connection tenant information set can be tenant information of tenants to be inter-tenant network connected.

As an example, the above performing subject can filter out information associated with the tenant field from the network connection custom resource information to obtain a second network connection tenant information set.

Step 5 of establishing an inter-tenant network for the second network connection tenant information set.

Here, the specific implementation is not repeated.

In some optional implementations of some embodiments, following step 205, the steps further comprise:
Step 1 of in response to receiving a network connection adjustment event for the first network connection tenant information set, acquiring first network policy information set group and network connection adjustment information.

Wherein, the network connection adjustment event may be an event for adjusting the inter-tenant network connection. The network connection adjustment information may include: tenant information of each tenant whose network connection has changed and change information of each tenant.

Step 2 of performing information adjustment on network policy information corresponding to the network connection adjustment information in the first network policy information set group to generate first network policy adjustment information and obtain a first network policy adjustment information set group. Wherein, the first network policy adjustment information may represent the network connection status of a corresponding tenant after adjustment. Network policy information corresponding to the above-mentioned network connection adjustment information may be the network policy information corresponding to the tenant involved in the network connection adjustment information.

Step 3 of performing an inter-tenant network adjustment for a corresponding network connection tenant information subset according to the first network policy adjustment information set group.

As an example, the performing subject can use open source calico network plugins, flannel network plugins and/or cilium network plugins to perform the inter-tenant network adjustment for a corresponding network connection tenant information subset according to the first network policy adjustment information set group.

The above-mentioned various embodiments of the present disclosure have the following beneficial effects: With the method for inter-tenant network connection of some embodiments of the present disclosure, the inter-tenant network connection can be realized quickly and efficiently. Specifically, the reason for the relevant abnormal inter-tenant network connection is that the problem of abnormal inter-tenant network connection often occurs when the CNI plugin is used to realize the custom configuration of the tenant network. Based on this, in the method for inter-tenant network connection of some embodiments of the present disclosure, first acquiring pre-configured first network connection custom resource information for subsequently determining the tenant information of tenants to be inter-tenant network connected, and the custom configuration of the inter-tenant network connection can be realized through the first network connection custom resource information. Then, in response to receiving an inter-tenant network connection event for the first network connection custom resource information, determining the first network connection tenant information set corresponding to the first network connection custom resource information. Here, determining the first network connection tenant information set for the subsequently determining first namespace information, whereby a subsequent inter-tenant network connection can be realized based on the first namespace corresponding to the tenant. Next, determining the first namespace information set corresponding to each piece of network connection tenant information in the first network connection tenant information set to obtain a first namespace information set group. Here, the obtained namespace information set corresponding to each piece of network connection tenant information is used for a subsequent construction of corresponding network policy information to realize the inter-tenant network connection. Furthermore, for each piece of first namespace information in the above-mentioned first namespace information set group, creating the network policy information corresponding to the above-mentioned first namespace information as first network policy information. Here, the obtained first network policy information can represent an inter-tenant network connection execution policy of a corresponding tenant to realize a subsequent inter-tenant network connection of the corresponding tenant. Finally, according to the obtained first network policy information set group, establishing the inter-tenant network connection for the first network connection tenant information set to realize the stable inter-tenant network connection. In summary, through the first network connection custom resource information, the custom configuration of the inter-tenant network can be realized. Based on this, by establishing corresponding network policy information in the first namespace corresponding to the first network connection tenant information, a stable in inter-tenant network connection can be achieved quickly and efficiently.

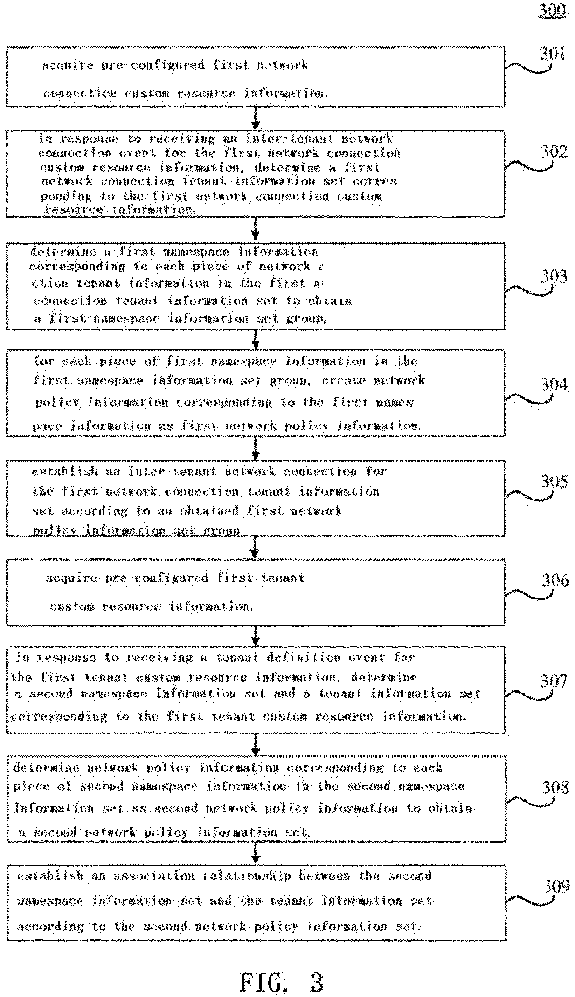

Further referring to FIG.3, process 300 of another embodiment of the method for inter-tenant connection according to the present disclosure is shown. The method for inter-tenant connection comprises the following steps:
Step 301 of acquiring pre-configured first network connection custom resource information.

Step 302 of in response to receiving an inter-tenant network connection event for the first network connection custom resource information, determining a first network connection tenant information set corresponding to the first network connection custom resource information.

Step 303 of determining a first namespace information set corresponding to each piece of network connection tenant information in the first network connection tenant information set to obtain a first namespace information set group.

Step 304 of for each piece of first namespace information in the first namespace information set group, creating network policy information corresponding to the first namespace information as first network policy information.

Step 305 of establishing an inter-tenant network connection for the first network connection tenant information set according to an obtained first network policy information set group.

In some embodiments, the specific implementation of steps 301-305 and the technical effects brought about by them can refer to steps 201-205 in the embodiment corresponding to FIG. 2, which will not be repeated here.

Step 306 of acquiring pre-configured first tenant custom resource information.

In some embodiments, the performing subject (e.g., electronic device 101 shown in FIG. 1) may acquire pre-configured first tenant custom resource information, wherein the first tenant custom resource information may represent the corresponding relationship between the tenant and the namespace. The first tenant custom resource information represent the corresponding relationship between the tenant and the namespace. The first tenant custom resource information may be the same as or may be different from the second tenant custom resource information.

Step 307 of in response to receiving a tenant definition event for the first tenant custom resource information, determining a second namespace information set and a tenant information set corresponding to the first tenant custom resource information.

In some embodiments, in response to receiving a tenant definition event for the first tenant custom resource information, the performing subject may determine a second namespace information set and a tenant information set corresponding to the first tenant custom resource information, wherein the tenant definition event may be an event of defining the association relationship between the tenant and the namespace. The second namespace information in the second namespace information set may be information related to the namespace field in the first tenant custom resource information. The tenant information in the tenant information set may be information related to the tenant field in the first tenant custom resource information.

As an example, the performing subject may receive a tenant definition event for the first tenant custom resource information through the api server.

As an example, the performing subject may use a namespaces selector to determine the second namespace information set corresponding to the first tenant custom resource information.

Step 308 of determining network policy information corresponding to each piece of second namespace information in the second namespace information set as second network policy information to obtain a second network policy information set.

In some embodiments, the performing subject may determine the network policy information corresponding to each piece of second namespace information in second namespace information set as second network policy information to obtain a second network policy information set, wherein the second network policy information may be a Network Policy resource. The second network policy information may act on a pod in a corresponding namespace to define the corresponding relationship between the tenant and the namespace.

Step 309 of establishing an association relationship between the second namespace information set and the tenant information set according to the second network policy information set.

In some embodiments, the performing subject may establish an association relationship between the second namespace information set and the tenant information set according to the second network policy information set.

As an example, the performing subject may utilize open source calico network plugins, flannel network plugins and/or cilium network plugins to establish the association relationship between the second namespace information set and the tenant information set according to the second network policy information set.

In some optional implementations of some embodiments, following step 309, the steps further include:
Step 1 of in response to receiving an association relationship adjustment event for tenant-namespace association relationship information, acquiring tenant-namespace relationship adjustment information, wherein the tenant-namespace association relationship may be a relationship that represents the association between the tenant and the namespace for the first tenant custom resource information. The association relationship adjustment event may be an event for adjusting the tenant-namespace association relationship. The tenant-namespace relationship adjustment information may represent the adjustment between the tenant and the namespace.

Step 2 of performing information adjustment on at least one piece of second network policy information associated with the tenant-namespace relationship adjustment information in the second network policy information set to obtain at least one piece of second network policy adjustment information, wherein the at least one piece of second network policy information associated with the tenant-namespace relationship adjustment information may be at least one piece of second network policy information corresponding to the namespace information involved in the tenant-namespace relationship adjustment information.

Step 3 of performing an association relationship adjustment on the tenant-namespace association relationship information according to the at least one piece of second network policy adjustment information.

As an example, the performing subject can use open source calico network plugins, flannel network plugins and/or cilium network plugins to performing an association relationship adjustment on the tenant-namespace association relationship information according to the at least one piece of second network policy adjustment information.

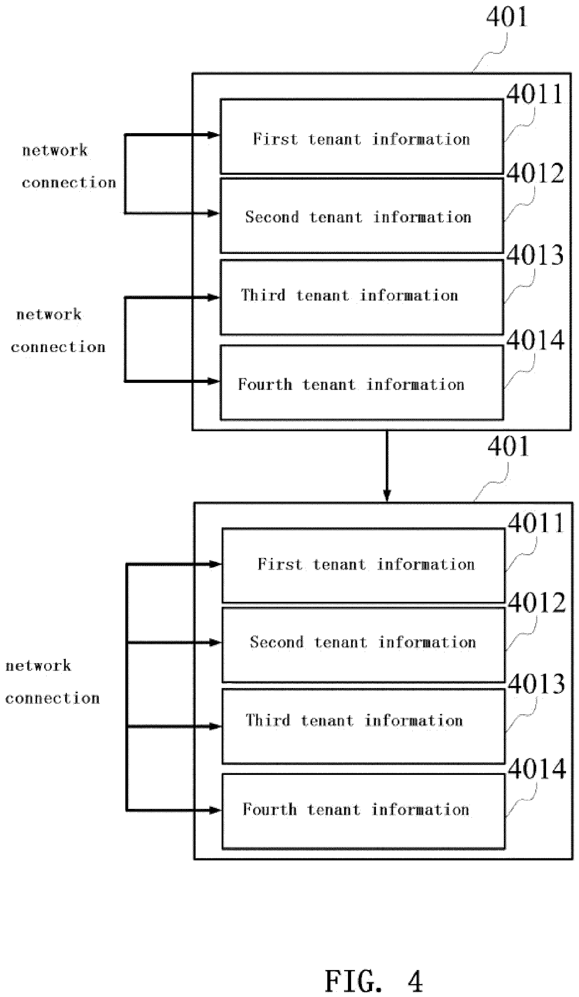

As an example, as shown in FIG4, for the association relationship adjustment event, tenant information set 401 corresponding to the tenant-namespace association relationship information includes: first tenant information 4011, second tenant information 4012, third tenant information 4013, and fourth tenant information 4014. The original network connection between first tenant information 4011 and second tenant information 4012, and the original network connection between third tenant information 4013 and fourth tenant information 4014 can be adjusted to the network connection between first tenant information 4011, second tenant information 4012, third tenant information 4013, and fourth tenant information 4014.

As can be seen from FIG. 3, compared with the description of some embodiments corresponding to FIG. 2, process 300 of the method for inter-tenant network connection in some embodiments corresponding to FIG. 3 can quickly respond to a tenant definition event through the acquired first tenant custom resource information, and efficiently execute the association relationship between the namespace and a corresponding tenant information.

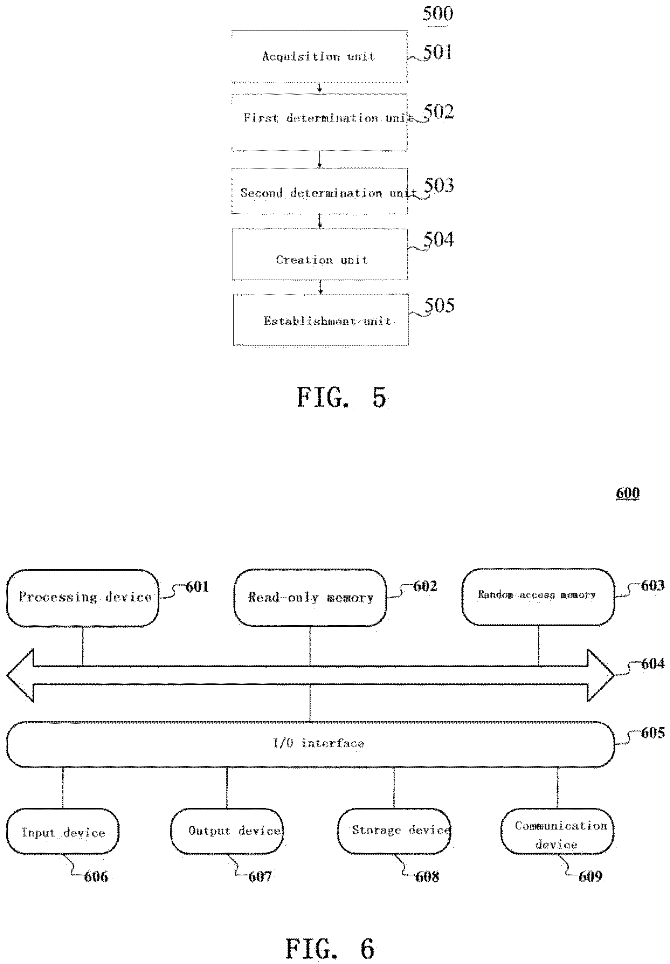

Further referring to FIG. 5, as an implementation of the methods shown in the above figures, the present disclosure provides some embodiments of an apparatus for inter-tenant network connection, which corresponds to the method embodiments shown in FIG. 2, and the apparatus for inter-tenant network connection can be specifically applied to various electronic devices.

As shown in FIG.5, an apparatus 500 for inter-tenant network connection comprises: an acquisition unit 501, a first determination unit 502, a second determination unit 503, a creation unit 504, and an establishment unit 505, wherein the acquisition unit 501 is configured to acquire pre-configured first network connection custom resource information; the first determination unit 502 is configured to in response to receiving an inter-tenant network connection event for the first network connection custom resource information, determine a first network connection tenant information set corresponding to the first network connection custom resource information; the second determination unit 503 is configured to determine a first namespace information set corresponding to each piece of network connection tenant information in the first network connection tenant information set to obtain a first namespace information set group; the creation unit 504 is configured to for each piece of first namespace information in the first namespace information set group, create network policy information corresponding to the first namespace information as first network policy information; and the establishment unit 505 is configured to establish an inter-tenant network connection for the first network connection tenant information set according to an obtained first network policy information set group.

In some optional implementations of some embodiments, apparatus 500 further comprises: a first information acquisition unit, a third determination unit, a fourth determination unit, and a first execution unit (not shown in the figures). Therein, the first information acquisition unit may be configured to: acquire pre-configured first tenant custom resource information. The third determination unit may be configured to: determine the second namespace information set and the tenant information set corresponding to the first tenant custom resource information in response to receiving a tenant definition event for the first tenant custom resource information. The fourth determination unit may be configured to: determine the network policy information corresponding to each piece of second namespace information in the second namespace information set as the second network policy information to obtain the second network policy information set. The first execution unit may be configured to: establish an association relationship between the second namespace information set and the tenant information set according to the second network policy information set.

In some optional implementations of some embodiments, apparatus 500 further comprises: a second acquisition unit, a fifth determination unit, a first network establishment unit, a sixth determination unit, and a second network establishment unit (not shown in the figures). Therein, the second acquisition unit may be configured to: acquire pre-configured second network connection custom resource information and second tenant custom resource information. The fifth determination unit may be configured to: determine the defined tenant information set in response to receiving the namespace establishment event according to the second tenant custom resource information. The first network establishment unit may be configured to: establish the internal network of the defined tenant corresponding to each piece of defined tenant information in the defined tenant information set. The sixth determination unit may be configured to: determine the second network connection tenant information set according to the second network connection custom resource information in response to determining that the internal network of each defined tenant has been established, wherein the second network connection tenant information set is a subset of the defined tenant information set. The second network establishment unit may be configured to: establish an inter-tenant network for the second network connection tenant information set.

In some optional implementations of some embodiments, apparatus 500 further comprises: a third acquisition unit, a first information adjustment unit, and a first network adjustment unit (not shown in the figure). Therein, the third acquisition unit may be configured to: acquire the first network policy information set group and the network connection adjustment information in response to receiving a network connection adjustment event for the first network connection tenant information set. The first information adjustment unit may be configured to: perform information adjustment on the network policy information corresponding to the network connection adjustment information in the first network policy information set group to generate the first network policy adjustment information and obtain the first network policy adjustment information set group. The first network adjustment unit may be configured to: perform inter-tenant network adjustment of the corresponding network connection tenant information subset according to the first network policy adjustment information set group.

In some optional implementations of some embodiments, the apparatus 500 further includes: a fourth acquisition unit, a second information adjustment unit and an association relationship adjustment unit (not shown in the figure). The fourth acquisition unit may be configured to: obtain the tenant-namespace relationship adjustment information in response to receiving an association relationship adjustment event for the tenant-namespace association relationship information. The second information adjustment unit may be configured to: perform information adjustment on at least one second network policy information in the second network policy information set associated with the tenant-namespace relationship adjustment information to obtain at least one second network policy adjustment information. The association relationship adjustment unit may be configured to: perform association relationship adjustment for the tenant-namespace association relationship information according to the at least one second network policy adjustment information.

In some optional implementations of some embodiments, first determination unit 502 may be further configured to: determine a first namespace information set corresponding to each piece of network connection tenant information in the first network connection tenant information set with a namespaces selector.

In some optional implementations of some embodiments, the tenant network connection between each first network connection tenant information in the first network connection tenant information set is pre-isolated based on a target tenant network isolation plugin.

It can be understood that the units in apparatus 500 for inter-tenant network connection as recorded correspond to the steps in the method described with reference to FIG. 2. Therefore, the operations, features and beneficial effects described above for the method are also applicable to apparatus 500 for inter-tenant network connection and the units contained therein, and will not be repeated here.

Referring to FIG. 6 below, a schematic diagram of the structure of electronic device (e.g., electronic device 101 in FIG. 1) 600 suitable for implementing some embodiments of the present disclosure is shown. The electronic device shown in FIG. 6 is only an example and should not impose any restrictions on the functions and scope of use of the embodiments of the present disclosure.

As shown in FIG. 6, electronic device 600 may comprise a processing device (e.g., a central processing unit, a graphics processor, etc.) 601, which may perform various appropriate actions and processing according to a program stored in read-only memory 602 or a program loaded from storage device 608 to random access memory 603. Various programs and data required for the operation of electronic device 600 are also stored in random access memory 603. Processing device 601, read-only memory 602, and random access memory 603 are connected to each other via bus 604. Input/output interface 605 is also connected to bus 604.

Typically, the following devices may be connected to input/output interface 605 including: input device 606 such as a touch screen, a touchpad, a keyboard, a mouse, a camera, a microphone, an accelerometer, a gyroscope, etc.; an output device 607 such as a liquid crystal display (LCD), a speaker, a vibrator, etc.; a storage device 608 such as a tape, a hard disk, etc.; and communication device 609. Communication device 609 may allow electronic device 600 to communicate wirelessly or wired with other devices to exchange data. Although FIG. 6 shows electronic device 600 with various devices, it should be understood that it is not required to implement or possess all the devices shown. It is feasible to implement or possess more or fewer devices alternatively. Each box shown in FIG. 6 may represent one device, or may represent multiple devices as needed.

In particular, according to some embodiments of the present disclosure, the process described above with reference to the flowchart may be implemented as a computer software program. For example, some embodiments of the present disclosure comprise a computer program product including a computer program carried on a computer-readable medium, the computer program including program code for executing the method shown in the flowchart. In some such embodiments, the computer program can be downloaded and installed from the network through communication device 609, or installed from storage device 608, or installed from read-only memory 602. When the computer program is executed by processing device 601, the above functions limited in the methods of some embodiments of the present disclosure are executed.

It should be noted that the computer-readable medium mentioned above in some embodiments of the present disclosure may be a computer-readable signal medium or a computer-readable storage medium or any combination of the above. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In some embodiments of the present disclosure, a computer-readable storage medium may be any tangible medium containing or storing a program that can be used by or in combination with an instruction execution system, apparatus, or device. In some embodiments of the present disclosure, a computer-readable signal medium may include a data signal propagated in a baseband or as part of a carrier wave, which carries a computer-readable program code. Such propagated data signals may take a variety of forms, including but not limited to electromagnetic signals, optical signals, or any suitable combination of the above. A computer-readable signal medium may also be any computer-readable medium other than a computer-readable storage medium, which may send, propagate, or transmit a program for use by or in combination with an instruction execution system, apparatus, or device. The program code contained on the computer-readable medium may be transmitted using any appropriate medium, including but not limited to: wires, optical cables, RF (radio frequency), etc., or any suitable combination of the above.

In some embodiments, the client and the server may communicate using any currently known or future developed network protocol such as HTTP (HyperText Transfer Protocol), and may be interconnected with digital data communications (e.g., communication networks) of any form or medium. Examples of communication networks include local area networks ("LAN"), wide area networks ("WAN"), internets (e.g., the Internet), and peer-to-peer networks (e.g., ad hoc peer-to-peer networks), as well as any currently known or future developed networks.

The computer-readable medium may be included in the electronic device; or it may exist independently without being assembled into the electronic device. The computer-readable medium carries one or more programs, when executed by the electronic device, causes the electronic device to: acquire pre-configured first network connection custom resource information; in response to receiving an inter-tenant network connection event for the first network connection custom resource information, determine a first network connection tenant information set corresponding to the first network connection custom resource information; determine a first namespace information set corresponding to each piece of network connection tenant information in the first network connection tenant information set to obtain a first namespace information set group; for each piece of first namespace information in the first namespace information set group, create network policy information corresponding to the first namespace information as first network policy information; and establish an inter-tenant network connection for the first network connection tenant information set according to an obtained first network policy information set group.

Computer program code for performing the operations of some embodiments of the present disclosure may be written in one or more programming languages or a combination thereof, including object-oriented programming languages such as Java, Smalltalk, C++, and conventional procedural programming languages such as "C" language or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying drawings illustrate the possible architecture, functions and operations of the systems, methods and computer program products according to various embodiments of the present disclosure. In this regard, each box in the flowchart or block diagram may represent a module, program segment, or part of a code, which contains one or more executable instructions for implementing the specified logical functions. It should also be noted that in some alternative implementations, the functions marked in the box may also occur in a different order than that marked in the accompanying drawings. For example, two boxes represented in succession can actually be executed substantially in parallel, and they can sometimes be executed in the opposite order, depending on the functions involved. It should also be noted that each box in the block diagram and/or flowchart, and the combination of boxes in the block diagram and/or flowchart, can be implemented with a dedicated hardware-based system that performs the specified functions or operations, or can be implemented with a combination of dedicated hardware and computer instructions.

The units described in some embodiments of the present disclosure can be implemented by software or by hardware. The described units may also be set in a processor, for example, it may be described as: a processor comprises an acquisition unit, a first determination unit, a second determination unit, a creation unit and an establishment unit. The names of these units do not constitute a limitation on the unit itself in some cases, for example, the acquisition unit may also be described as a "unit for acquiring pre-configured first network connection custom resource information".

The functions described above in this article may be at least partially performed by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD), etc.

Some embodiments of the present disclosure also provide a computer program product, including a computer program, which implements any of the above-mentioned methods for inter-tenant network connection when executed by a processor.

The above description is only about some preferred embodiments of the present disclosure and an explanation of the technical principles used. Those skilled in the art should understand that the disclosure scope involved in the embodiments of the present disclosure is not limited to the technical solutions formed by a specific combination of the above technical features, but should also cover other technical solutions formed by any combination of the above technical features or their equivalent features without departing from the above disclosed concept. For example, the above features and the technical features with similar functions disclosed in the embodiments of the present disclosure (but not limited to) are replaced with each other to form a technical solution.

## Claims

1. A method for inter-tenant network connection, comprising:
acquiring pre-configured first network connection custom resource information;
in response to receiving an inter-tenant network connection event for the first network connection custom resource information, determining a first network connection tenant information set corresponding to the first network connection custom resource information;
determining a first namespace information set corresponding to each piece of network connection tenant information in the first network connection tenant information set to obtain a first namespace information set group;
for each piece of first namespace information in the first namespace information set group, creating network policy information corresponding to the first namespace information as first network policy information; and
establishing an inter-tenant network connection for the first network connection tenant information set according to an obtained first network policy information set group.

2. The method according to claim 1, further comprising:
acquiring pre-configured first tenant custom resource information;
in response to receiving a tenant definition event for the first tenant custom resource information, determining a second namespace information set and a tenant information set corresponding to the first tenant custom resource information;
determining network policy information corresponding to each piece of second namespace information in the second namespace information set as second network policy information to obtain a second network policy information set; and
establishing an association relationship between the second namespace information set and the tenant information set according to the second network policy information set.

3. The method according to claim 1, further comprising:
acquiring pre-configured second network connection custom resource information and second tenant custom resource information;
in response to receiving a namespace establishment event, determining a defined tenant information set according to the second tenant custom resource information;
establishing an internal network of a defined tenant corresponding to each piece of defined tenant information in the defined tenant information set;
in response to determining that the internal network of each defined tenant has been established, determining a second network connection tenant information set according to the second network connection custom resource information, wherein the second network connection tenant information set is a subset in the defined tenant information set; and
establishing an inter-tenant network for the second network connection tenant information set.

4. The method according to claim 1, further comprising:
in response to receiving a network connection adjustment event for the first network connection tenant information set, acquiring the first network policy information set group and network connection adjustment information;
performing information adjustment on network policy information corresponding to the network connection adjustment information in the first network policy information set group to generate first network policy adjustment information and obtain a first network policy adjustment information set group; and
adjusting the inter-tenant network corresponding to a network connection tenant information subset according to the first network policy adjustment information set group.

5. The method according to claim 2, further comprising:
in response to receiving an association relationship adjustment event for tenant-namespace association relationship information, acquiring tenant-namespace relationship adjustment information;
performing information adjustment on at least one piece of second network policy information associated with the tenant-namespace relationship adjustment information in the second network policy information set to obtain at least one piece of second network policy adjustment information; and
performing an association relationship adjustment on the tenant-namespace association relationship information according to the at least one piece of second network policy adjustment information.

6. The method according to claim 1, wherein the determining a first namespace information set corresponding to each piece of network connection tenant information in the first network connection tenant information set comprises:
with a namespaces selector, determining a first namespace information set corresponding to each piece of network connection tenant information in the first network connection tenant information set.

7. The method according to claim 1, wherein the tenant network connection between each piece of first network connection tenant information in the first network connection tenant information set is pre-isolated based on a target tenant network isolation plugin.

8. An apparatus for inter-tenant network connection, comprising:
an acquisition unit configured to acquire pre-configured first network connection custom resource information;
a first determination unit configured to, in response to receiving an inter-tenant network connection event for the first network connection custom resource information, determine a first network connection tenant information set corresponding to the first network connection custom resource information;
a second determination unit configured to determine a first namespace information set corresponding to each piece of network connection tenant information in the first network connection tenant information set to obtain a first namespace information set group;
a creation unit configured to, for each piece of first namespace information in the first namespace information set group, create network policy information corresponding to the first namespace information as first network policy information; and
an establishment unit, configured to establish an inter-tenant network connection for the first network connection tenant information set according to an obtained first network policy information set group.

9. An electronic device, comprising:
one or more processors; and
a storage device, on which one or more programs are stored, wherein
the one or more programs, when executed by the one or more processors, cause the one or more processors to implement the method according to any one of claims 1 to 7.

10. A computer readable medium having a computer program stored thereon, wherein the computer program, when executed by a processor, implements the method according to any one of claims 1 to 7.

11. A computer program product comprising a computer program, wherein the computer program, when executed by a processor, implements the method according to any one of claims 1 to 7.
